# EUROPÄISCHE PATENTSCHRIFT

(11) **EP 0 778 986 B1**
(45) Veröffentlichungstag und Bekanntmachung des Hinweises auf die Patenterteilung: **20.01.1999**
(21) Anmeldenummer: 95929005.7
(22) Anmeldetag: 29.08.1995
(51) Int. Cl.: H01M 8/24

(54) **FESTSTOFFELEKTROLYT-HOCHTEMPERATUR-BRENNSTOFFZELLENANORDNUNG**
SOLID ELECTROLYTE, HIGH TEMPERATURE FUEL CELL ARRANGEMENT
SYSTEME DE CELLULES ELECTROCHIMIQUES A HAUTE TEMPERATURE ET A ELECTROLYTE SOLIDE

(30) Priorität: 03.09.1994 DE 4431510
(43) Veröffentlichungstag der Anmeldung: 18.06.1997
(73) Patentinhaber: FORSCHUNGSZENTRUM JÜLICH GMBH, 52425 Jülich (DE)
(72) Erfinder: RINGEL, Helmut, D-52382 Niederzier (DE)
(86) Internationale Anmeldenummer: DE9501168
(87) Internationale Veröffentlichungsnummer: WO9608052

(56) Entgegenhaltungen:
- EP-A- 0 355 420
- EP-A- 0 402 569
- WO-A-92/16029
- PATENT ABSTRACTS OF JAPAN vol. 017 no. 383 (E-1400) ,19.Juli 1993 & JP,A,05 067471 (NIPPON TELEGR & TELEPH CORP) 19.März 1993,
- PATENT ABSTRACTS OF JAPAN vol. 18 no. 540 (E-1616) ,14.Oktober 1994 & JP,A,06 196196 (FUJI ELECTRIC CO LTD) 15.Juli 1994,
- PATENT ABSTRACTS OF JAPAN vol. 017 no. 057 (E-1315) ,4.Februar 1993 & JP,A,04 267071 (MATSUSHITA ELECTRIC IND CO LTD) 22.September 1992,
- PATENT ABSTRACTS OF JAPAN vol. 017 no. 319 (E-1383) ,17.Juni 1993 & JP,A,05 036417 (NIPPON TELEGR & TELEPH CORP) 12.Februar 1993,
- PATENT ABSTRACTS OF JAPAN vol. 012 no. 273 (E-639) ,29.Juli 1988 & JP,A,63 053863 (MITSUBISHI HEAVY IND LTD) 8.März 1988,

## Beschreibung

Die Erfindung bezieht sich auf eine Festelektrolyt-Hochtemperatur-Brennstoffzellenanordnung, bestehend aus mehreren in Serie geschalteten, unmittelbar benachbarten Brennstoffzellen, die durch plane, aneinanderliegende Verbindungsplatten mit zwischen je zwei Verbindungsplatten befindlichem Festelektrolytelement gebildet werden, wobei die Verbindungsplatten zweier benachbarter Zellen die Kathode der einen Zelle mit der Anode der anderen Zelle elektrisch leitend verbinden und wobei die Verbindungsplatten Gaskanal und Gaszuführung sowie Luftkanal und Luftzuführung aufweisen.

In einer Brennstoffzelle läuft ein Prozeß ab, bei dem Brenngas mit Sauerstoff elektrochemisch umgesetzt wird und dabei direkt elektrischer Strom entsteht. Die Reaktionspartner werden in getrennten Kammern, den Gaskanälen und den Luftkanälen, zugeführt, wobei die Brennstoff und Sauerstoff führenden Kammern durch das keramische Festelektrolyten-Element, das auf beiden Seiten mit den Elektroden versehen ist, voneinander getrennt sind. Im Betrieb werden an der brennstoffseitigen Elektrode des Festelektrolyten Elektronen abgegeben und an der sauerstoffseitigen Elektrode des Festelektrolyten Elektronen aufgenommen. An den beiden Elektroden des Festelektrolyten stellt sich eine Potentialdifferenz ein. Der Festelektrolyt hat die Funktion, die Reaktanten zu trennen, die Ladung in Form von Ionen zu überführen und zugleich einen Elektronen-Kurzschluß zwischen den beiden Elektroden des Festelektrolyten zu verhindern. Hierzu muß er eine niedrige Leitfähigkeit für Elektronen und zugleich eine hohe Leitfähigkeit für Ionen aufweisen.

Festelektrolyt-Hochtemperatur-Brennstoffzellen eignen sich infolge der relativ hohen Betriebstemperaturen - sie liegen im Bereich von 800 - 1100°C - im Gegensatz zu Niedertemperaturbrennstoffzellen dazu, außer Wasserstoffgas auch Kohlenwasserstoffe, wie z.B. Erdgas oder flüssig speicherbares Propan, umzusetzen. Mit Festelektrolyt-Hochtemperatur-Brennstoffzellen sind hohe Leistungsdichten erreichbar, die größenordnungsmäßig im Bereich von mehreren 100 mW pro cm² liegen. Die einzelne Hochtemperatur-Brennstoffzelle erzeugt eine Leerlauf spannung von etwa 0,7 V. Höhere Spannungen erfordern die Serienschaltung mehrerer Einzelzellen.

Eine Feststoffelektrolyt-Hochtemperatur-Brennstoffzellenanordnung der eingangs bezeichneten Art ist aus der DE-OS 39 35 722 bekannt. Vier Plattenstapel sind - waagerecht angeordnet - in einem Rahmen aus isolierendem Material eingespannt, über den Gas und Luft den Brennstoffzellen zugeführt bzw. entnommen wird.

Festelektrolyt-Brennstoffzellenanordnungen sind ferner aus US 4,476,198, DE 40 09 138 sowie aus DE 34 37 354 bekannt. Gemäß DE 40 09 138 besteht ein Festelektrolyt-Hochtemperatur-Brennstoffzellenmodul aus mehreren in Serie geschalteten planen, fest aufeinanderliegenden Festelektrolyt-Hochtemperatur-Brennstoffzellen. Eine bipolare Platte verbindet die Kathode einer Zelle mit der Anode einer benachbarten Zelle elektrisch. Ferner werden mittels der bipolaren Platte Gas- bzw. Luftkanäle gebildet. Festelektrolytplatten weisen auf der einen Seite Kathodenmaterial und auf der anderen Seite Anodenmaterial auf. Um thermische Spannungen zu vermeiden, ist die bipolare Platte aus einer metallisch leitenden Legierung gefertigt, deren thermischer Ausdehnungskoeffizient mit demjenigen des Festelektrolytelementes übereinstimmt.

Aus der europäischen Patentanmeldung 0 473 540 ist eine Brennstoffzellenanordnung bekannt, bei der die Brennstoffzellenelemente tellerförmig sind. Durch speziell ausgestaltete Gasführung wird dabei erreicht, daß ein Wärmeaustausch zwischen zugeführter Luft und abströmender Luft und Gas stattfindet. Die Nachverbrennung des Gases und der Luft kann dabei unmittelbar nach deren Austritt aus den Brennstoffzellen erfolgen.

Die infolge der Tellerbauweise radiale Gasströmung bewirkt jedoch, daß die Gasströmung mit dem Radius stark zu- bzw. abnimmt. Dies bedeutet, daß der Wärmetauscher und ebenso die Gasreaktionen in der Zelle nicht für eine bestimmte Gasgeschwindigkeit ausgelegt werden kann.

Außerdem steht der waagerecht aufgeschichtete Zellenstapel bei direkter Gasnachverbrennung quasi innerhalb der Flamme der Gasnachverbrennung, die Zelle wird damit unnötig stark aufgeheizt. Da die Flamme radial nach außen tritt und dann durch die Thermik nach oben steigt, wird der untere Teil des Zellenstapels schwach und der obere Teil des Zellenstapels sehr stark aufgeheizt. Diese ungleichmäßige Aufheizung verursacht hohe thermische Spannungen im Zellenstapel.

Ein weiterer Nachteil ist der kaum vermeidbare Gas/Luft-Gleichstrom an der PEN-Platte (d.h. die Elektrolyt-Platte, die auf der einen Seite die positive Kathode und auf der anderen Seite die negative Anode trägt), auch ein Querstrom ist nicht möglich. Die Zuführung des Gases von innen, aber vor allem die Luftzuführung von außen an den großen äußeren Umfang des Zellenstapels ist schwierig.

Ein weiteres großes Problem bei der Brennstoffzellentechnologie ist die Abdichtung der Fugen. Bei der aus der zuletzt genannten Patentanmeldung bekannten Brennstoffzelle ist die Dichtung dadurch erschwert, daß die unteren Fugen stärker belastet sind als die oberen Fugen und an der Einspannstelle Biegespannungen auftreten.

Es ist Aufgabe der Erfindung, eine Brennstoffzellenanordnung der eingangs bezeichneten Art zu schaffen, bei der die vorgenannten Nachteile vermieden werden.

Diese Aufgabe wird erfindungsgemäß dadurch gelöst, daß die Verbindungsplatten im wesentlichen senkrecht angeordnet sind und Gas- und Luftkanal oben zur Gasnachverbrennung hin offen sind
und daß
entweder die Verbindungsplatten einen oben von der Luft-Zuführung (8a) gespeisten und in den Luftkanal (4) unten mündenden weiteren Kanal (10) enthalten, der zwischen Luft- und Gaskanal (4 und 6) unmittelbar benachbarter Brennstoffzellen liegt und der dem Wärmeaustausch zwischen zugeführter Luft und der nach oben geführten Luft bzw. dem Gas dient,
oder die Verbindungsplatten einen oben von der Gas-Zuführung gespeisten und in den Gaskanal (6) unten mündenden weiteren Kanal enthalten, der zwischen Luft- und Gaskanal (4 und 6) unmittelbar benachbarter Brennstoffzellen liegt und der dem Wärmeaustausch zwischen zugeführtem Gas und der nach oben geführten Luft bzw. dem nach oben geführten Gas dient.

Dadurch, daß die Gasnachverbrennungsöffnungen nach oben gerichtet sind, wird eine unerwünschte Aufheizung des Zellenstapels vermieden.

Durch die senkrechte Anordnung der Brennstoffzelle wird ferner die Abdichtung der Fugen zwischen den einzelnen Platten bei der extrem hohen Temperatur ( 1000°C) erleichtert, da jede Fuge nun - für den Fall, daß keine starre Lötverbindung verwendet wird - mit der gleichen Anpreßkraft gedichtet werden kann, und zwar durch seitliche Krafteinleitung. Diese Kraft kann auch im weiteren der jeweiligen Zellen-Betriebstemperatur angepaßt werden. So kann der Anpreßdruck bei Raumtemperatur sehr gering gehalten werden und erst bei hoher Temperatur, d.h. bei ausreichender Erweichung des Dichtungsmaterials wird der notwendige Dichtungsdruck aufgebracht und somit die sehr spröden und extrem empfindlichen Festelektrolyt-Platten vor einem Bruch bewahrt.

Die erfindungsgemäße Brennstoffzellenanordnung ermöglicht es, den oben offenen Luft- und Gaskanälen unmittelbar einen Wärmetauscher nachzuschalten, über den die Luft-Zuführung geleitet wird. Dabei kann es zweckmäßig sein, zusätzlich auch die Gaszuführung über den Wärmetauscher zu leiten.

Bei einer Ausgestaltung der erfindungsgemäßen Brennstoffzellenanordnung wird eine Verbindungsplatte mit innerem Wärmetauscher eingesetzt, der darin besteht, daß die Verbindungsplatten einen zwischen dem Gas- und dem Luftkanal liegenden, von der Luft-Zuführung gespeisten und in den Luftkanal mündenden weiteren Kanal enthält, der dem Wärmeaustausch zwischen zugeführter Luft und der nach oben geführten Luft bzw. dem Gas dient.

Alternativ wird erfindungsgemäß eine Verbindungsplatte mit innerem Wärmetauscher eingesetzt, der darin besteht, daß die Verbindungsplatten einen weiteren zwischen dem Gas- und dem Luftkanal liegenden, von der Gas-Zuführung gespeisten und in den Gaskanal mündenden weiteren Kanal enthält, der dem Wärmeaustausch zwischen zugeführtem Gas und der nach oben geführten Luft bzw. dem Gas dient.

Eine weitere Ausgestaltung der erfindungsgemäßen Brennstoffzellenanordnung besteht in der Verwendung von runden, scheibenförmig ausgestalteten Verbindungsplatten. Diese Ausgestaltung ist von Vorteil, da die Wärmespannungen hierbei im Material bei der erforderlichen Betriebstemperatur von etwa 1000°C am geringsten sind.

Die erfindungsgemäße Brennstoffzellenanordnung ist in der Zeichnung schematisch dargestellt und wird im folgenden näher erläutert. Es zeigen:
- Figur 1a: Brennstoffzellenanordnung im Querschnitt und Schnitt A/A;
- Figur 1b: Brennstoffzellenanordnung im Querschnitt und Schnitt B/B;
- Figur 1c: Verbindungselement der Brennstoffzellenanordnung gemäß den Figuren 1a und 1b im Schnitt und mit beiden Seitenansichten;
- Figur 2a: Verbindungselement mit dem Wärmeaustausch dienendem Kanal;
- Figur 2b: Teil einer Brennstoffzellenanordnung mit Verbindungselementen gemäß Figur 2a.

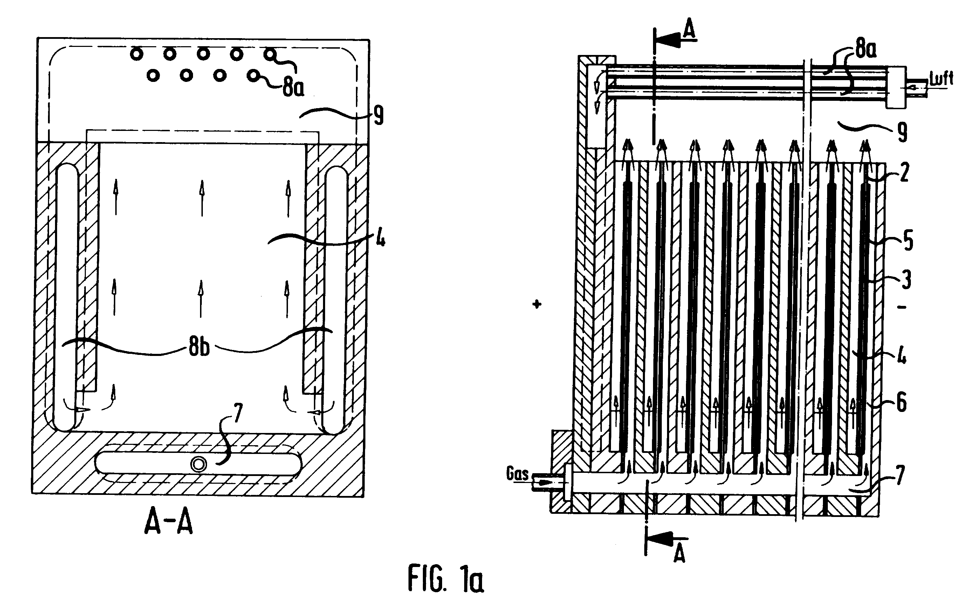

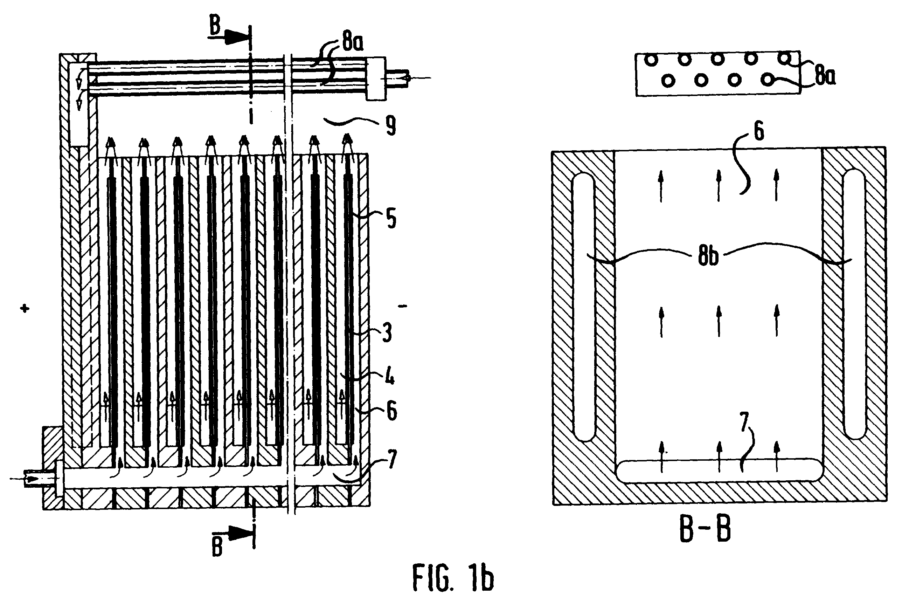

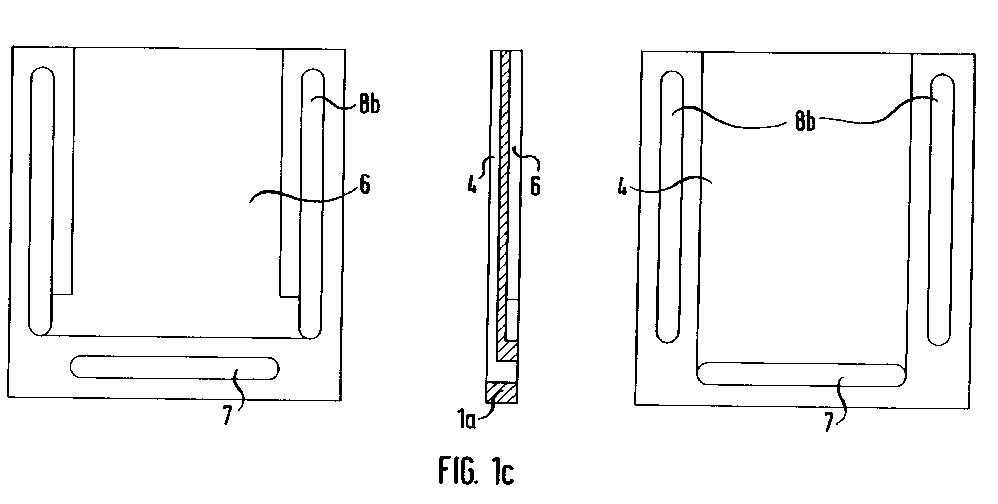

Die in Figur la dargestellte Brennstoffzellenanordnung besteht aus in Serie geschalteten, unmittelbar benachbarten Brennstoffzellen, die durch plane, aneinanderliegende Verbindungsplatten der in Figur 1c als Einzelelement dargestellten Art gebildet sind. Das Festelektrolytelement 2 ist jeweils zwischen zwei Verbindungselementen integriert. Entlang der Kathode 3 befindet sich der Luftkanal 4, entlang Anode 5 der Gaskanal 6.

Die Verbindungsplatten sind senkrecht angeordnet und Luft- und Gaskanal 4 und 6 sind oben offen.

Wie aus Figur la hervorgeht, wird Gas über die Gaszuleitung 7 den Gaskanälen 6 zugeführt, während die Luft von der oberhalb der Brennstoffzellen angeordneten, als Wärmetauscher ausgebildeten Luftzuführung 8a über seitliche Kanäle 8b seitlich von unten in den Luftkanal 4 eingeleitet wird.

Oberhalb der oben offenen Luft- und Gaskanäle 4 und 6 befindet sich die Nachbrennkammer 9 bzw. der für die Luftzuführung vorgesehene Wärmetauscher.

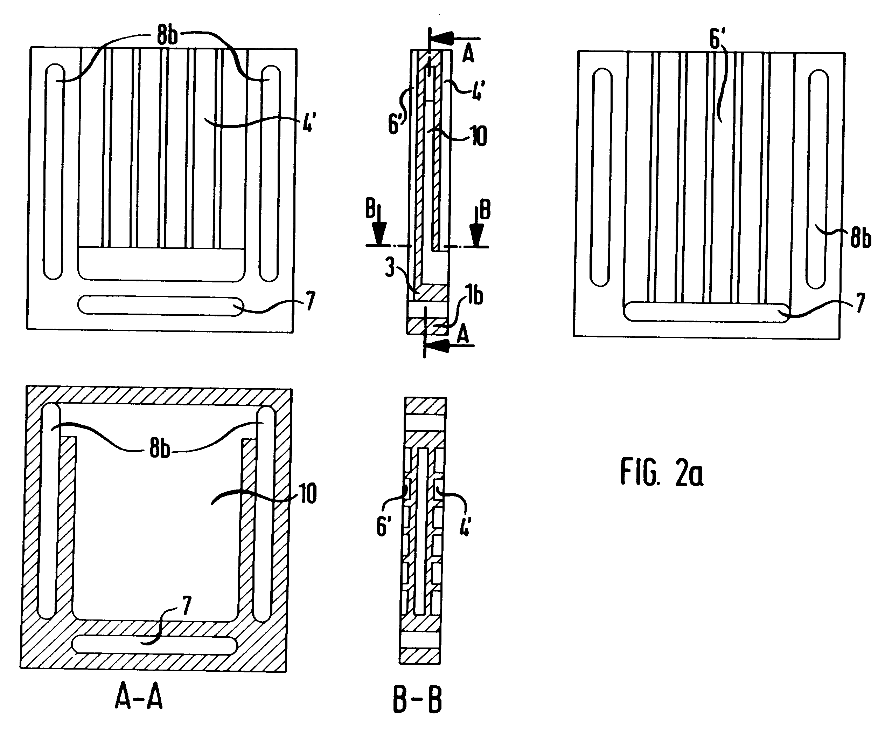

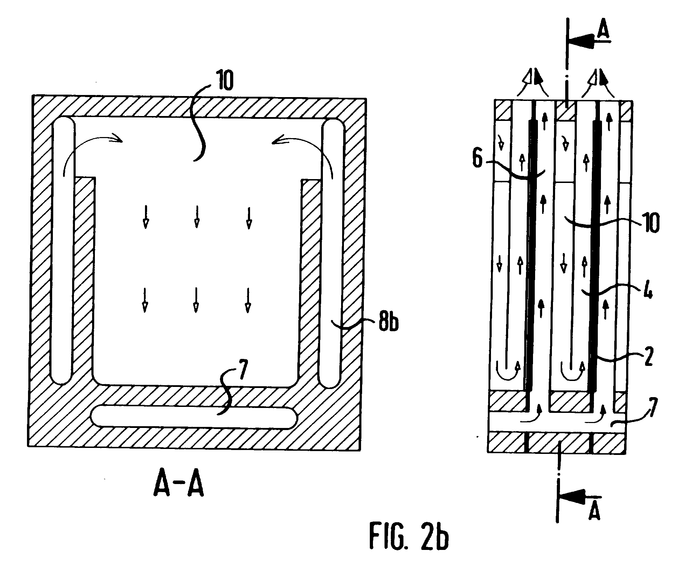

Figur 2a zeigt die Verbindungsplatte 1b für die in Figur 2b dargestellte weiterausgestaltete Brennstoffzellenanordnung. Die Verbindungsplatte hat einen oben seitlich offenen Kanal 10, der in den Luftkanal 4 unten einmündet.

Luftkanal 4 und Gaskanal 6 sind, wie aus der Draufsicht von oben in Figur 2a zu erkennen ist, mittels senkrecht verlaufenden Stegen in einzelne Kanäle 4' bzw. 6' unterteilt.

Wie-aus Figur 2b zu erkennen ist, kommt der Kanal 10 zwischen Luft- und Gaskanal 4 und 6 und zwischen je zwei benachbarten Festelektrolytelementen 2' zu liegen und dient somit dem Wärmeaustausch zwischen zugeführter Luft und der nach oben geführten Luft bzw. dem Gas.

## Patentansprüche

1. Festelektrolyt-Hochtemperatur-Brennstoffzellenanordnung, bestehend aus mehreren in Serie geschalteten, unmittelbar benachbarten Brennstoffzellen, die durch plane, aneinanderliegende Verbindungsplatten mit zwischen je zwei Verbindungsplatten befindlichem Festelektrolytelement gebildet werden, wobei die Verbindungsplatten zweier benachbarter Zellen die Kathode der einen Zelle mit der Anode der anderen Zelle elektrisch leitend verbinden und wobei die Verbindungsplatten Luftkanal und Luftzuführung sowie Gaskanal und Gaszuführung aufweisen,
**dadurch gekennzeichnet,**
daß die Verbindungsplatten (1a, 1b) weitgehend senkrecht angeordnet sind und Luft- und Gaskanal (4 und 6) oben zur Gasnachverbrennung (9) hin offen sind und daß die Verbindungsplatten einen oben von der Luft-Zuführung (8a) gespeisten und in den Luftkanal (4) unten mündenden weiteren Kanal (10) enthalten, der zwischen Luft- und Gaskanal (4 und 6) unmittelbar benachbarter Brennstoffzellen liegt und der dem Wärmeaustausch zwischen zugeführter Luft und der nach oben geführten Luft bzw. dem Gas dient.

2. Festelektrolyt-Hochtemperatur-Brennstoffzellenanordnung, bestehend aus mehreren in Serie geschalteten, unmittelbar benachbarten Brennstoffzellen, die durch plane, aneinanderliegende Verbindungsplatten mit zwischen je zwei Verbindungsplatten befindlichem Festelektrolytelement gebildet werden, wobei die Verbindungsplatten zweier benachbarter Zellen die Kathode der einen Zelle mit der Anode der anderen Zelle elektrisch leitend verbinden und wobei die Verbindungsplatten Luftkanal und Luftzuführung sowie Gaskanal und Gaszuführung aufweisen,
**dadurch gekennzeichnet,**
daß die Verbindungsplatten (1a, 1b) weitgehend senkrecht angeordnet sind und Luft- und Gaskanal (4 und 6) oben zur Gasnachverbrennung (9) hin offen sind und daß die Verbindungsplatten einen oben von der Gas-Zuführung gespeisten und in den Gaskanal (6) unten mündenden weiteren Kanal enthalten, der zwischen Luft- und Gaskanal (4 und 6) unmittelbar benachbarter Brennstoffzellen liegt und der dem Wärmeaustausch zwischen zugeführtem Gas und der nach oben geführten Luft bzw. dem nach oben geführten Gas dient.

## Claims

1. Solid-electrolyte, high-temperature fuel cell arrangement, consisting of a plurality of fuel cells connected immediately next to one another in series and constituted by plane connecting plates arranged adjacent to one another with a solid-electrolyte element situated between each two connecting plates, the connecting plates of two adjacent cells electroconductively connecting the cathode of the one cell to the anode of the other cell, and the connecting plates incorporating an air duct and air inlet and a gas duct and gas inlet,
characterised in that
the connecting plates (1a, 1b) are arranged largely vertically and the air and gas ducts (4 and 6) are open at the top towards the gas post-combustion area (9) and that the connecting plates contain a further duct (10) which is fed at the top by the air inlet (8a) and opens out at the bottom into the air duct (4), which duct (10) is situated between the air and gas ducts (4 and 6) of immediately adjacent fuel cells and which is used for heat exchange between incoming air and the air, or gas, being conducted upwards.

2. Solid-electrolyte, high-temperature fuel cell arrangement, consisting of a plurality of fuel cells connected immediately next to one another in series and constituted by plane connecting plates arranged adjacent to one another with a solid-electrolyte element situated between each two connecting plates, the connecting plates of two adjacent cells electroconductively connecting the cathode of the one cell to the anode of the other cells and the connecting plates incorporating an air duct and air inlet and a gas duct and gas inlet,
characterised in that
the connecting plates (1a, 1b) are arranged largely vertically and the air and gas ducts (4 and 6) are open at the top towards the gas post-combustion area (9) and that the connecting plates contain a further duct which is fed at the top by the gas inlet and opens out at the bottom into the gas duct (6), which duct is situated between the air and gas ducts (4 and 6) of immediatelely adjacent fuel cells and which is used for heat exchange between incoming gas and the air being conducted upwards or gas being conducted upwards.

## Revendications

1. Dispositif de piles à combustible à électrolyte solide et à haute température, constitué de plusieurs piles à combustible directement voisines et branchées en série, qui sont formées par des plaques de liaison planes. adjacentes, comportant un élément électrolyte solide entre chaque paire de plaques, les plaques de liaison de deux piles voisines reliant de manière conductrice de l'électricité la cathode d'une pile à l'anode de l'autre pile et les plaques de liaison comportant un canal pour l'air et une alimentation en air ainsi qu'un canal pour du gaz et une alimentation en gaz,
caractérisé en ce que les plaques (1a,1b) de liaison sont disposées sensiblement verticalement et les canaux (4 et 6) d'air et de gaz sont ouverts en haut en direction de la post-combustion (9) de gaz et en ce que les plaques de liaison contiennent un canal (10) supplémentaire alimenté en haut par l'alimentation (8a) en air et débouchant en bas dans le canal (4) d'air, canal (10) qui se trouve entre les canaux (4 et 6) d'air et de gaz de piles à combustible directement voisines et qui sert à l'échange de chaleur entre de l'air amené et l'air et le gaz guidés vers le haut.

2. Dispositif de piles à combustible à électrolyte solide et à haute température, constitué de plusieurs piles à combustibles directement voisines et branchées en série, qui sont formées par des plaques de liaison planes, adjacentes et comportent un élément électrolyte solide entre chaque paire de plaques, les plaques de liaison de deux piles voisines reliant de manière conductrice de l'électricité la cathode d'une pile à l'anode de l'autre pile et les plaques de liaison comportant un canal pour l'air et une alimentation en air ainsi qu'en canal pour du gaz et une alimentation en gaz,
caractérisé en ce que les plaques (1a,1b) de liaison sont disposées sensiblement verticalement et les canaux (4 et 6) d'air et de gaz sont ouverts en haut en direction de la post-combustion (9) de gaz et en ce que les plaques de liaison contiennent un canal supplémentaire alimenté en haut par l'alimentation en gaz et débouchant en bas dans le canal (6) de gaz, canal supplémentaire qui se trouve entre les canaux (4 et 6) de gaz et d'air de piles à combustible directement voisines et qui sert à l'échange de chaleur entre le gaz amené et l'air envoyé vers le haut et le gaz guidé vers le haut.
